# EUROPÄISCHE PATENTANMELDUNG

(11) **EP 2 950 024 A1**
(43) Veröffentlichungstag der Anmeldung: **02.12.2015**
(21) Anmeldenummer: 15169707.5
(22) Anmeldetag: 28.05.2015
(51) Int. Cl.: F27B 9/20, F27B 9/30, F27D 17/00

(54) **VERFAHREN ZUR ENERGIEVERSORGUNG KERAMISCHER ÖFEN**

(30) Priorität: 28.05.2014 DE 102014008218
(71) Anmelder: ZBK Zentrum für Baukeramik GmbH, 92521 Schwarzenfeld (DE)
(72) Erfinder: Horvath, Peter, 92280 Kastl (DE); Wurst, Roland, 71549 Auenwald (DE)
(74) Vertreter: Patronus IP Patent- und Rechtsanwälte

(57) **Zusammenfassung**

Die vorliegende Erfindung betrifft ein Verfahren zum Betreiben von Industrieöfen, insbesondere kontinuierlich betriebenen Industrieöfen, wobei Brenngut durch den Ofen geführt und dabei von Verbrennungsgasen aufgeheizt wird, dann in einer Brennzone bei einer vorgegebenen Temperatur gebrannt wird und anschließend durch eine Kühlzone geführt wird, in der das Brenngut mittels im Gegenstrom strömenden Gases abgekühlt wird, wobei das Brenngas für den Ofen zunächst für die Erzeugung elektrischer Energie in einer Kraft-Wärme-Kopplung, wie einem Blockheizkraftwerk, und/oder einer Hochtemperaturbrennstoffzelle verwendet wird und die Abgase dieser Stromerzeugung zur Erwärmung der Verbrennungsluft des Ofens verwendet werden oder in die Aufheiz- und/oder Brennzone des Ofens geführt werden.

## Beschreibung

Die Erfindung betrifft ein Verfahren zum Betreiben von Industrieöfen, insbesondere kontinuierlich betriebenen Industrieöfen nach dem Oberbegriff des Anspruchs 1.

In der keramischen Industrie werden vor allem aus energetischen Gründen neben periodischen Öfen häufig kontinuierliche Öfen zum Brennen der Erzeugnisse eingesetzt. Die kontinuierlichen Öfen werden üblicherweise in Form von Tunnel- oder Rollenöfen ausgeführt, jedoch sind auch andere Bauformen wie Monker- oder Durchschuböfen bekannt.

Grundsätzlich wird bei einem Tunnelofen das zu brennende Gut auf Ofenwagen aufgesetzt und mit diesen Ofenwagen durch den Tunnel hindurchgeführt. Hierbei werden die Tunnelofenwagen üblicherweise auf Stoß aneinander am Ofeneingang in den Tunnelofen eingeführt, wobei die Tunnelofenwagen durch entsprechende Vorkehrungen gegeneinander und gegen den Ofenraum dicht abschließen. In dieser Weise wird das Brenngut kontinuierlich durch den Tunnelofen geführt, wobei das Brenngut vom Ofeneingang zunächst eine Vorwärmzone durchläuft, anschließend eine Brennzone durchläuft, anschließend üblicherweise mit einer sogenannten Sturzkühlung abgekühlt wird und anschließend aus dem Tunnelofen herausgefahren wird. Die aus dem Tunnelofen herausgefahrenen Wagen werden anschließend üblicherweise neben dem Tunnelofen auf einem Gleis abkühlen gelassen und dann entladen, um wieder beladen zu werden.

Herkömmliche Tunnelöfen arbeiten hierbei nach einem relativ einfachen Gegenstromwärmetauscher-Prinzip. Dies bedeutet, dass die Verbrennungsluft vom Ofenausgang her in den Ofen eingesaugt wird und zur Brennzone strömt, wo die angesaugte Luft für die Verbrennung verwendet wird. Während des Strömens der angesaugten Luft vom Ofenausgang zur Brennzone erhitzt sich diese an dem gebrannten Gut und den heißen Ofenwagen.

Die heißen Brenngase werden in Richtung zum Ofeneingang gelenkt, wobei im Bereich des Ofeneingangs der Rauchgasabzug befindlich ist, so dass die in den Tunnelofen eingefahrenen Tunnelofenwagen zusammen mit dem darauf befindlichen Gut auf dem Weg zur Brennzone von den heißen Gasen vorgeheizt wird. Für dieses Prinzip ist grundsätzlich eine Zuführung der Brenngase über Brenneranlagen nur in der Brennzone erforderlich, da der gesamte Aufheizprozess durch die zum Ofeneingang strömenden Rauchgase erfolgen kann. Üblicherweise erstreckt sich die Brennzone jedoch bis in die Aufheizzone, was bedeutet, dass Brenner nicht nur im Bereich der höchsten Temperatur angeordnet sind, sondern auch im Bereich der Aufheizzone. Häufig werden herkömmliche Industriebrenner aber nur ab einer Temperatur von ca. 750°C eingesetzt, da aus Sicherheitsgründen sichergestellt werden muss, dass zündfähiges Gasgemisch nur bei einer Temperatur, die über der Zündgrenze des Brenngases liegt, zugeführt wird. Bei Temperaturen unter 750°C werden daher nur noch Brenner verwendet, die mit einer eigenen Zündung bzw. einer Flammüberwachung ausgestattet sind. Häufig werden diese Brenner auch als Hochgeschwindigkeitsbrenner ausgeführt, da naturgemäß die heiße Verbrennungsluft, die aus der Brennzone in den Ofeneingang gesaugt wird, nach oben steigt und die Temperatur über den Ofenquerschnitt stark unterschiedlich sein kann. Mit Hochgeschwindigkeitsbrennern kann dann eine bessere Durchmischung der Gase und damit eine gleichmäßigere Temperaturverteilung erzielt werden. Diese Brenner sind daher deutlich aufwendiger als die in der Brennzone verwendeten Brenner.

Unter einer Temperatur von ca. 500°C befinden sich häufig keine Brenner mehr und es wird mit Ausnahme von vorgeschalteten Vorwärmezonen in der Regel keine Energie von außen zugeführt und die Aufheizung des Brenngutes erfolgt lediglich durch die im Ofentunnel strömenden Gase.

Als Energieträger für diese Öfen werden vorzugsweise fossile Brennstoffen wie Erdgas, Flüssiggas, Erdöl oder Kohle verwendet. Es ist Stand der Technik, dass diese Öfen auch mit regenerativen Energieträgern versorgt werden. Insbesondere bei kleinen Öfen wird auch elektrische Energie verwendet. Im industriellen Maßstab sind Elektroöfen aus Kostengründen üblicherweise unwirtschaftlich. Es entspricht jedoch dem Stand der Technik Öfen elektrisch zu beheizen und es sind Varianten bekannt, bei denen sowohl elektrisch als auch mit fossilen Energieträgern beheizt wird.

Zwischen Brennzone und Ofenausgang eines Tunnelofens befindet sich die Kühlzone. Dort wird im Bereich des Ofenausgangs Umgebungsluft eingesaugt und in Richtung der Brennzone geblasen. Damit wird zum einen das Brenngut gekühlt und zum andern die Luft erhitzt.

Es besteht in der keramischen Industrie und in der Ofenbauindustrie der Trend Tunnelöfen zu bauen, die möglichst kurz sind. Um dies verfahrenstechnisch überhaupt bewerkstelligen zu können, werden seit vielen Jahren Tunnelöfen und auch andere oben erwähnte kontinuierliche Öfen mit einer sogenannten Sturz- oder Schnellkühlzone ausgestattet. In dieser Zone wird zur Kühlung der Ware eine große Menge Luft eingeblasen um zu gewährleisten, dass bei kurzer Ofenbauweise die Temperatur der Ware am Ofenausgang und damit der Energieverlust möglichst gering ist. Diese Kühlluft sowie die Kühlluft, die im Gegenstrom vom Ofenausgang in die Kühlzone geführt wird, werden üblicherweise abgesaugt und für die Trocknung der Ware verwendet. Zum Teil wird diese Luft auch in der Aufheizzone bzw. zur Vorwärmung des Brenngutes oder der Verbrennungsluft genutzt.

Seit geraumer Zeit setzt sich jedoch die Erkenntnis durch, dass es energetisch günstiger ist, in der Sturzkühlzone weniger Luft abzusaugen und den Energieinhalt im Ofen zu belassen. Durch die übliche Bauart sind dem jedoch Grenzen gesetzt und es gibt Entwicklungen, die eine alternative Nutzung der in der Kühlzone abgesaugten Wärmeenergie vorschlagen.

So ist in DE 43 28 301 beschrieben, die in der Kühlzone abgesaugte Luft zur Erzeugung von Heißdampf zu verwenden um damit thermodynamische Arbeitsmaschinen zu betreiben und z.B. Strom zu erzeugen. Ein Nachteil dieses Verfahrens besteht jedoch darin, dass die Möglichkeit, die abgesaugte Kühlluftmenge wesentlich zu verringern, nicht mehr besteht. Da es energetisch günstiger ist, die Wärmeenergie nicht aus der Kühlzone zu entnehmen, ist es vorteilhaft, die Menge an abgesaugter Kühlluft zu reduzieren oder ganz zu eliminieren. Damit wäre dieses Verfahren nicht mehr anwendbar, da nicht mehr genug heiße Abluft aus der Kühlzone für die Erzeugung von Heißdampf zur Verfügung stehen würde.

In der Patentanmeldung DE 10 2011 100 736 A1 wird ein mehrstufiges Verfahren beschrieben, bei dem die Abgase aus der Brennzone nicht zum Abgaskamin geführt werden, sondern einer Abhitzeanlage zugeführt und dort zur Elektroenergieerzeugung genutzt werden. Im Weiteren wird die Abwärme der Abhitzeanlage für Trocken- und Heizzwecke genutzt. Als Energieträger dafür wird insbesondere ein hoher Anteil Fest- und Abfallbrennstoff vorgeschlagen.

Diesem Verfahren ist wie dem Verfahren nach DE 43 28 301 gemeinsam, dass die Abwärme des Ofens (Kühlzone bzw. der Abgasstrom aus der Brennzone) zur Erzeugung von elektrischer Energie genutzt wird. Dies erfordert, dass die Wärmeenergie zunächst zur Dampferzeugung genutzt wird, um dann mittels Dampfkraftmaschine oder thermodynamischer Arbeitsmaschine in elektrische Energie umgewandelt zu werden. Da die Brennkurve eines keramischen Ofens einen entscheidenden Einfluss auf die Werkstoffeigenschaften der erzeugten Produkte hat, ist es erforderlich diese sehr genau zu regeln. Dabei sind insbesondere Brenntemperatur, Haltezeiten und Heiz- bzw. Kühlraten in den unterschiedlichen Temperatur-Bereichen des keramischen Brandes von entscheidender Bedeutung. Dabei ist kaum möglich die resultierende Abwärme so zu steuern, dass ein nachgeschalteter Prozess mit Dampf- und Elektroenergieerzeugung zu jeder Zeit mit optimalem Wirkungsgrad arbeitet.

Neben der Verwendung von Brennstoffen als Energieträger zur Beheizung keramischer Öfen ist auch der Einsatz von Elektroenergie Stand der Technik. Darüberhinaus sind Öfen bekannt, die sowohl mit Brennstoffen als auch mit elektrischer Energie beheizt werden.

In DE 1 558 062 A ist eine Elektro-Wanderbefeuerung beschrieben, bei der elektrische Heizelemente an den Ofenwagen befestigt sind und mit diesen durch den Ofen geschoben werden. Eine Beheizung mit Brennstoffen ist dabei nicht vorgesehen und der Ofen bedarf keinerlei Zuluft- oder Abluftleitungen für Brenn- bzw. Rauchgase. Um das Prinzip des Gegenstromwärmetauschers zu verwirklichen wird lediglich Umgebungsluft durch den Ofen geführt. Ein Nachteil dieses Verfahrens ist jedoch, dass die Ofenatmosphäre nicht geregelt werden kann, da ausschließlich Umgebungsluft im Ofenraum für den Wärmaustausch verwendet wird. Die Ofenatmosphäre kann aber eine entscheidende Bedeutung für die Ausbildung von Werkstoffeigenschaften und insbesondere die Brennfarbe haben. Zum Beispiel wird bei der Herstellung von Porzellan oder von baukeramischen Erzeugnissen in bestimmten Temperaturbereichen mit reduziertem Sauerstoffanteil verbrannt um damit eine reduzierende Wirkung auf färbende Metalloxide in den keramischen Rohstoffen oder Glasuren zu erzielen. Damit lässt sich erreichen, dass z.B. Eisenoxid in zweiwertiger (FeO) und nicht dreiwertiger Form (Fe₂O₃) im Endprodukt auftritt und sich die Farbe von gelblich zu grau ändert. Auch andere werkstofftechnische Eigenschaften lassen sich mit der Ofenatmosphäre beeinflussen.

Es ist auch bekannt, im Brenngutstapel Heizelemente anzubringen, um damit die Ofenatmosphäre und Brenntemperatur unabhängig voneinander regeln zu können (DE 507880 A).

Ferner ist bekannt Öfen sowohl mit Heizgas als auch elektrisch zu beheizen, um damit eine bessere Regelbarkeit und Temperaturverteilung zu erzielen (DE 431357 A). Dies wird insbeondere dadurch erreicht, dass im Boden elektrische Heizelemente integriert sind.

In DE 702988 A ist ein Tunnelofen beschrieben, der in der Ofenwand elektrische Widerstandsheizungen besitzt.

In DE 530993 A ist ein elektrisch beheizter Tunnelofen beschrieben, bei dem zwei Wagenreihen im Tunnel in entgegengesetzter Richtung bewegt werden und durch elektrische Beheizung eine bessere Temperaturverteilung erzielt werden soll.

Gemeinsam ist den Verfahren bzw. Anlagen nach DE 507880 A, DE 431357 A, DE 702988 A und DE 530993 A, dass sich die elektrischen Heizelemente im Brennraum befinden und dadurch den bei keramischen Reaktionen frei werdenden korrosiven Gasen wie Fluor-, Chlor-, und Schwefelverbindungen ausgesetzt sind. Um dieses Problem zu lösen ist in CH 247399 A ein elektrischer Tunnelofen beschrieben, der spezielle Dunstabzüge aufweist, um die korrosiven Dämpfe abzuziehen.

Soll ein keramischer Ofen mit unterschiedlichen Energieträgern betrieben werden, wie dies in DE 507880 A und DE 431357 A beschrieben ist, und neben elektrischer Energie auch Brennstoff zur Energieversorgung verwendet werden soll, dann besteht das Problem, dass die Verbrennungsgase an sich korrosiv sind. So bilden sich insbesondere bei der Verbrennung von Brenngasen neben Kohlendioxid zum Teil erhebliche Mengen Wasserdampf. Dieser Wasserdampf und der sich bei z.B. unterstöchiometrischer Verbrennung bildende Wasserstoff können sich sehr korrosiv auf die Werkstoffe von Widerstandsheizelementen auswirken. Damit ist eine Anordnung von elektrischen Heizelementen in teilweise mit Brennstoffen beheizten Öfen ausgesprochen problematisch.

Unter Berücksichtigung vorgenannter Probleme ist es nach dem Stand der Technik nicht möglich die Energieträger für keramische Öfen kurzfristig und kurzzeitig z.B. von Brennstoffen auf elektrische Energie zu wechseln um damit die periodisch günstige Verfügbarkeit von elektrischer Energie zu nutzen.

Es ist Stand der Technik Öfen und Trockner im Wärmeverbund zu betreiben und Kühlluft aus dem Ofen zur Trocknung zu verwenden. Es ist ferner Stand der Technik Abwärme von Blockheizkraftwerken (Kraft-Wärmekoppelung) zur Energieversorgung der Trockner zu verwenden. Zur Trocknung wird jedoch nur eine Temperatur von maximal 120°C verwendet. Die Abgastemperatur von Blockheizkraftwerken kann bis 600°C und mehr betragen. Das Problem dabei ist, dass aufgrund des Wärmeverbundes Ofen, Trockner und der Ofenbauweise mit Sturzkühlung zur Verkürzung des Ofens bereits ein großer Teil der erforderlichen Trocknungsenergie aus der Kühlzone des Ofens zur Verfügung gestellt wird und werden muss und damit der Anteil der durch Blockheizkraftwerke erzeugten Wärme beschränkt ist. Eine Reduktion der Ofenkühlluft ist durch die kurze Bauweise solcher Öfen in der Regel nur sehr eingeschränkt möglich, da sonst die Ware mit erhöhter Temperatur den Ofen verlassen würde und dadurch große Energieverluste entstehen würden. Damit ist die Nutzung von Blockheizkraftwerken sehr begrenzt und beschränkt sich auf Anlagen, bei denen nur begrenzte Mengen Ofenkühlluft für die Trocknung verwendet werden.

Die Vorteile einer Kraftwärmekoppelung, nämlich ein sehr hoher energetischer Gesamtwirkungsgrad, können daher beim Betrieb von keramischen Öfen und auch bei einem Wärmeverbund Ofen, Trockner nur sehr eingeschränkt genutzt werden. Selbst bei Entkoppelung von Trockner und Ofen und maximaler Nutzung von Kraft-Wärmekopplung für die Wärmeenergieversorgung von Trockenanlagen beschränkt sich die maximale Nutzung solcher KWK-Anlagen auf den Trockenenergiebedarf, der ca. bei 30% des Gesamtenergiebedarfs liegt.

Aufgabe der Erfindung ist es, ein Verfahren zum Betreiben von Industrieöfen, insbesondere kontinuierlich betriebenen Industrieöfen zu schaffen, welches den Gesamtwirkungsgrad verbessert und die Flexibilität bei der Energieträgernutzung erhöht.

Die Aufgabe wird mit den Merkmalen des Anspruchs 1 gelöst.

Vorteilhafte Weiterbildungen sind in den hiervon abhängigen Ansprüchen gekennzeichnet.

Erfindungsgemäß ist ein Verfahren zum Betreiben von Industrieöfen, insbesondere kontinuierlich betriebenen Industrieöfen, vorgesehen. Dabei wird Brenngut durch den Ofen geführt und dabei von Verbrennungsgasen aufgeheizt, dann in einer Brennzone bei einer vorgegebenen Temperatur gebrannt und anschließend durch eine Kühlzone geführt. In der Kühlzone wird das Brenngut mittels im Gegenstrom strömenden Gases abgekühlt, wobei das Brenngas für den Ofen zunächst für die Erzeugung elektrischer Energie in einem Blockheizkraftwerk und/oder einer Hochtemperaturbrennstoffzelle verwendet wird. Die Abgase dieser Stromerzeugung werden zur Erwärmung der Verbrennungsluft des Ofens verwendet oder in die Aufheiz- und/oder Brennzone des Ofens geführt.

Zum Beispiel kann bei einem mit Gas befeuerten Tunnelofen eine Aufheizung der Verbrennungsluft auf 400°C - 500°C den Gasbedarf bei Verlustfreiheit und optimaler Verbrennung um bis zu 15 % reduzieren. Dazu ist es erforderlich mittels Wärmetauscher die Wärmeenergie des Abgases auf die Verbrennungsluft, die üblicherweise mit Umgebungstemperatur zur Verfügung steht, zu übertragen.

Bei Zufuhr der Abwärme der Kraftwärmekoppelung zur Aufheizzone können die Abgase direkt in die Aufheizzone geführt werden, da sie z.B. bei mit Gas befeuerten Öfen die gleiche Zusammensetzung haben wie die aus der Brennzone strömenden Abgase.

Betrachtet man die Stoff- und Wärmebilanz der Aufheiz- und Brennzone eines nach dem Gegenstromwärmetauscher-Prinzip arbeitenden Tunnelofens, so sind vereinfacht und ohne Berücksichtigung von Verlustwärmemengen etc. zwei Energieströme zu berücksichtigen. Zum einen treten Brenngut, Ofenwagen und ggfs. Brennhilfsmittel (genannt Brenngut) mit Umgebungstemperatur in die Zone ein und verlassen diese mit Endbrandtemperatur. Bei einer Umgebungstemperatur von 20°C und einer Brenntemperatur von 1.020°C ergibt sich somit ein Energiebetrag von Q = m_{BG} · c_{BG} · T, wobei darin die entsprechenden Massen und spezifischen Wärmekapazitäten des Brenngutes des Ofenwagens zu berücksichtigen sind. Unter Annahme einer spezifischen Wärmekapazität von 0,85 kJ/kgK würde damit der Energiebedarf zum Aufheizen theoretisch 850 kJ/kg zuzüglich der Reaktionswärme betragen. Im Gegenstrom dazu wird ein Rauchgasvolumenstrom von z.B. 1.200°C auf 150°C abgekühlt. Die Wärmeenergie beträgt dabei wiederum Q = m_{RG} · c_{pRG} · T, wobei darin die Masse des Rauchgases und dessen spezifische Wärmekapazität zu berücksichtigen sind. Nimmt man einen spezifischen Energieverbrauch von 3.200 kJ/kg_{BG} an, würde unter Annahme einer spezifischen Wärmekapazität des Rauchgases von 1,345 kJ/kgK (nicht temperaturkorrigiert) und einer Abgastemperatur von 150°C eine Rauchgasmenge benötigt, die um den Faktor 2,3 größer ist als die Brenngutmasse (Rauchgas-Brenngut-Verhältnis 2,3), wenn der Wärmeübergang ausschließlich durch Konvektion erfolgen würde.

Bei Zufuhr von Wärmeenergie bei niedrigeren Temperaturen, wie z.B. 600°C, kann eine Reduktion des Rauchgasvolumenstromes aus der Zone mit einer Temperatur über 600°C erfolgen. Dies bedeutet auch, dass der Energie-Eintrag in der Zone über 600°C reduziert werden kann.

Bilanztechnisch würde dieser Energieeintrag bei niedriger Temperatur zu einer entsprechend gleichen reduzierten Energiezufuhr bei höherer Temperatur führen.

Um aber bei einem Wärmeübergang nur durch Konvektion die erforderliche Energiemenge bei höheren Temperaturen zu übertragen, reichen die Rauchgasmengen nicht aus. Das bedeutet, dass die Reduktion des Energieeintrages bei höheren Temperaturen vom Anteil der durch Strahlung übertragenden Wärmemengen abhängt. Dieser Anteil wird z.B. durch die Flammtemperatur beeinflusst. Da der Wärmeübergang durch Strahlung mit der Temperatur zunimmt und insbesondere über 750°C der Wärmeübergang durch Strahlung zu überwiegen beginnt, besteht die Möglichkeit auch bei reduzierten Rauchgasmengen Wärmeenergie effektiv zu übertragen. Dazu ist es vorteilhaft, bei Gasbrennern eine möglichst hohe Flammtemperatur und eine möglichst große Flammfläche zu verwirklichen. Dies ist durch den Einsatz von Flachbrennern möglich, die eine Flamme entwickeln, die sich seitlich flächig ausbreitet. Werden solche Brenner mit einem Luftfaktor von 1 betrieben, was einer optimalen stöchiometrischen Verbrennung entspricht, kann die maximale Flammtemperatur erzielt werden und der Wärmeübergang durch Strahlung größtmöglich sein.

Es ist ferner möglich durch eine Erhöhung des SauerstoffGehaltes in der Verbrennungsluft die Flammtemperatur weiter zu erhöhen. Dazu würde sich insbesondere anbieten, Sauerstoff, der bei der Elektrolyse von Wasser und der Erzeugung von Wasserstoff anfällt, zu verwenden.

Da sich zwar durch diese Maßnahmen die Flammtemperatur und der Wärmeübergang durch Strahlung erhöht, sich aber das Rauchgasvolumen reduziert, ist es vorteilhaft einen größeren Kühlluftvolumenstrom aus der Kühlzone in die Brenn- und Aufheizzone zu leiten.

Da die Wärmeverluste eines Tunnelofens und insbesondere die Reaktionsenthalpie nicht linear mit der Temperatur bzw. der Ofenlänge ansteigen und insbesondere die Reaktionsenthalpie der keramischen Prozesse temperaturabhängig positiv oder negativ ist, kann durch Zufuhr von BHKW-Abwärme die Energiezufuhr temperaturabhängig optimiert werden. Zum Beispiel tritt beim Erhitzen vom reinen Tonmineral Kaolinit zunächst eine endotherme Reaktion bei ca. 450°C bis 600°C auf (Abgabe Kristallwasser und Bildung von Metakaolinit), die entsprechende Wärmeenergie erfordert. Bei höheren Temperaturen wird in einer exothermen Reaktion Wärmeenergie freigesetzt (Umwandlung Metakaolinit in Spinell-Phase bei ca. 925°C). Das bedeutet, dass der Energiebedarf für die keramischen Reaktionen von z.B. Kaolinit bei niedrigeren Temperaturen größer und bei höheren Temperaturen kleiner ist. Vor diesem Hintergrund kann es günstig sein, den Energieeintrag bei niedrigen Temperaturen zu erhöhen und bei höheren Temperaturen zu reduzieren.

Je nach Bauart des KWK-Aggregates entsteht neben der Wärmemenge des Abgases, das z.B. eine Temperatur von 600°C hat, in der Regel eine ähnliche große Wärmemenge durch Kühlung, wobei diese Temperatur z.B. nur 80°C beträgt. Dadurch ist es vorteilhaft die Abgaswärme in der Aufheizzone des keramischen Ofens und die Kühlwärme für die Erwärmung von Heiz- oder Betriebswasser, zur Trocknung oder der Erwärmung der Verbrennungsluft zu verwenden. Zum Beispiel könnten beim Betrieb eines Blockheizkraftwerkes (BHKW) mit einer elektrischen Leistung von 1 MW ca. 500 - 700 kW für die Erwärmung der Verbrennungsluft oder der Aufheizzone durch Abgase und ca. 600 - 800 kW für die Trocknung mit Kühlwärme zur Verfügung gestellt werden. Insgesamt lässt sich damit eine optimale Nutzung nicht nur der Wärmemengen, sondern auch der Temperaturniveaus der auftretenden Wärmemengen verwirklichen.

Da die Abgastemperatur von BHKWs begrenzt ist, ist es erfindungsgemäß besonders vorteilhaft die Stromerzeugung durch Brennstoffzellen zu verwirklichen, wobei insbesondere Hochtemperatur-Feststoff-Brennstoffzellen (Solid Fuel Cells SOFC) vorteilhaft sind. Diese Brennstoffzellen erzeugen elektrischen Strom und Wärme, indem durch ein elektrisch isolierendes keramisches Material Sauerstoff-Ionen diffundieren und dadurch Sauerstoff zum Brennstoff gelangt und diesen oxidieren kann. Neben Wärme wird dabei elektrische Energie aus den Brenngasen erzeugt. Da dieser Prozess keinem Carnot-Wirkungsgrad unterliegt, können deutlich höhere elektrische Wirkungsgrade von z.B. 60% erzielt werden.

Durch die hohe Betriebstemperatur dieser SOFC Brennstoffzellen ist es nicht erforderlich reinen Wasserstoff zu verwenden, sondern es kann herkömmliches Erdgas und sogar Biogas verwendet werden. Da diese Brennstoffzellen bei Betriebstemperaturen von 650°C bis 1.000°C arbeiten, hat auch die Abwärme entsprechend hohe Temperatur und kann dadurch in Bereiche der Aufheiz- bzw. Brennzone mit entsprechend hohen Temperaturen geblasen werden. Ein Problem dieser Brennstoffzellen kann darin bestehen, dass die Brenngase nicht vollständig verbrannt werden und zur Erhöhung des Wirkungsgrades eine Nachverbrennung der nicht vollständig verbrannten Abgase vorgesehen werden muss. Es ist somit besonders vorteilhaft, diese Abgase direkt in einen keramischen Ofen zu führen, da dabei die Wärmeenergie dieser unverbrannten Brennstoffe genutzt werden kann und eine Nachverbrennung nicht notwendig ist.

Besonders vorteilhaft ist es, bei Verfügbarkeit von günstigem, elektrischem Strom, z.B. in windreichen Zeiten mit großer Sonneneinstrahlung, keinen Strom mittels BHKW oder Brennstoffzellen zu produzieren, dafür aber den Ofen und/oder den Trockner elektrisch zu beheizen. Sinnvollerweise muss dies entsprechend der Verfügbarkeit von Strom kurzfristig und kurzzeitig möglich sein.

Erfindungsgemäß wird dies dadurch erreicht, dass eine elektrische Widerstandsheizung außerhalb des Ofenraumes angeordnet ist um zu verhindern, dass die Heizelemente aufgrund der beim keramischen Brand freiwerdenden Gase korrodieren. Dies dient auch dazu, Korrosion durch bei der Verbrennung entstehenden Wasserdampf zu vermeiden. Diese elektrische Beheizung soll mit Umgebungsluft durchströmt werden und die resultierende Heißluft in den Brennraum geführt werden. Um sicherzustellen, dass die Brennkurve im Ofen bei einem Wechsel von z.B. Brenngas zu elektrischer Beheizung unverändert beibehalten werden kann, müssen die Luftmengen, die elektrisch vorgewärmt und in den Ofen eingeblasen werden, den Rauchgasmengen entsprechen, die bei gleichem Energieeintrag entstehen. Das bedeutet, dass pro kWh Wärmeleistung ca. 1 mₙ³ Umgebungsluft elektrisch erwärmt und dem Ofenraum zugeführt werden soll.

Um die Ofenatmosphäre konstant zu halten, ist es vorteilhaft in den elektrisch erhitzten Luftstrom Wasserdampf einzublasen. Dies würde natürlich aus Korrosionsgründen erst nach dem Erhitzen erfolgen. Wasserdampf, der wie oben erwähnt bei der Verbrennung entsteht, reagiert auch mit keramischen Werkstoffen und wirkt z.B. bei Glasuren als Netzwerkwandler. Elektrisch und gasbeheizte Öfen führen dadurch in der Regel zu anderen Oberflächeneigenschaften. Mit dieser Wasserdampf-Zufuhr kann dieser Einfluss reduziert werden und einen schnellen Wechsel zwischen den Energieträgern ermöglichen.

Ein weiterer Vorteil des erfindungsgemäßen Verfahrens ist, dass Hochtemperaturbrennstoffzellen (SOFC) auch für die Hochtemperaturelektrolyse (SOEC Solid Electrolytical Cell) verwendet werden können. Das bedeutet, dass bei günstiger Verfügbarkeit von elektrischer Energie diese Zellen genutzt werden können, um aus wasserdampfhaltigem Rauchgas mittels elektrischer Energie Wasserstoff zu produzieren. Dazu würde die SOEC unter elektrische Spannung gesetzt und Rauchgas aus dem Ofen abgesaugt. Dabei kann Wasserstoff erzeugt werden, der wiederum als Brenngas dienen kann.

Dieser Wasserstoff kann dann zwischengespeichert und für den Betrieb des Blockheizkraftwerkes, der Brennstoffzellen oder des Ofens verwendet oder in bestehende Gasnetze eingespeist werden. Dabei kann es von Vorteil sein, den erzeugten Wasserstoff mit Brenngasen höherer Dichte und höheren Brennwertes zu mischen, um die Heizleistung und die erzeugten Rauchgasmengen möglichst konstant zu halten. Anbieten würde es sich dabei, den erzeugten Wasserstoff z.B. mit Flüssiggas (Propan, Butan) zu mischen und darüber die resultierende Wobbezahl konstant zu halten.

## Patentansprüche

1. Verfahren zum Betreiben von Industrieöfen, insbesondere kontinuierlich betriebenen Industrieöfen, wobei Brenngut durch den Ofen geführt und dabei von Verbrennungsgasen aufgeheizt wird, dann in einer Brennzone bei einer vorgegebenen Temperatur gebrannt wird und anschließend durch eine Kühlzone geführt wird, in der das Brenngut mittels im Gegenstrom strömenden Gases abgekühlt wird, **dadurch gekennzeichnet, dass** das Brenngas für den Ofen zunächst für die Erzeugung elektrischer Energie in einer Kraft-Wärme-Kopplung, wie einem Blockheizkraftwerk, und/oder einer Hochtemperaturbrennstoffzelle verwendet wird und die Abgase dieser Stromerzeugung zur Erwärmung der Verbrennungsluft des Ofens verwendet werden oder in die Aufheiz- und/oder Brennzone des Ofens geführt werden.

2. Verfahren nach Anspruch 1, **dadurch gekennzeichnet, dass** die Abgase aus der Kraft-Wärme-Kopplung direkt in die Aufheizzone des Ofens geführt werden.

3. Verfahren nach Anspruch 1 oder 2, **dadurch gekennzeichnet, dass** der Sauerstoffgehalt der Verbrennungsluft zur Erhöhung der Flammtemperatur der Brenner erhöht wird, insbesondere durch Sauerstoff, der bei der Elektrolyse von Wasser anfällt.

4. Verfahren nach einem der vorhergehenden Ansprüche, **dadurch gekennzeichnet, dass** Flachbrenner verwendet werden und diese mit einem Luftfaktor von 1 betrieben werden.

5. Verfahren nach einem der vorhergehenden Ansprüche, **dadurch gekennzeichnet, dass** die Kühlwärme des KWK-Aggregats zur Erwärmung von Heiz- oder Betriebswasser, zur Trocknung oder zur Erwärmung der Verbrennungsluft genutzt wird.

6. Verfahren nach einem der vorhergehenden Ansprüche, **dadurch gekennzeichnet, dass** die Stromerzeugung und Abgaserzeugung mit einer Hochtemperatur-Brennstoffzelle (SOFC) erfolgt.

7. Verfahren nach einem der vorhergehenden Ansprüche, **dadurch gekennzeichnet, dass** bei Vorhandensein von billigem Strom Trockner und/oder Ofen elektrisch beheizt werden und/oder eine Hochtemperatur-Elektrolyse-Zelle betrieben wird, die aus wasserdampfhaltigem Rauchgas Wasserstoff mittels elektrischer Energie erzeugt.

8. Verfahren nach einem der vorhergehenden Ansprüche, **dadurch gekennzeichnet, dass** die elektrische Beheizung außerhalb des Brennraumes liegt und der elektrisch erhitzte Luftstrom mit oder ohne Wassereindüsung dem Brennraumes zugeführt wird.
